# FASCICULE DE BREVET EUROPEEN

(11) **EP 2 785 614 B1**
(45) Date de publication et mention de la délivrance du brevet: **10.02.2016**
(21) Numéro de dépôt: 11801799.5
(22) Date de dépôt: 30.11.2011
(51) Int. Cl.: B65D 85/804, A47J 31/36

(54) **CAPSULE POUR L'EXTRACTION D'UNE BOISSON SOUS PRESSION**
KAPSEL ZUR EXTRAKTION EINES UNTER DRUCK STEHENDEN GETRÄNKS
CAPSULE FOR THE EXTRACTION OF A BEVERAGE UNDER PRESSURE

(43) Date de publication de la demande: 08.10.2014
(73) Titulaire: Frydman, Alain, 75008 Paris (FR)
(72) Inventeur: Frydman, Alain, 75008 Paris (FR)
(74) Mandataire: Blot, Philippe Robert Emile
(86) Numéro de dépôt international: PCT/FR2011/052827
(87) Numéro de publication internationale: WO 2013/079812

(56) Documents cités:
- WO-A1-2010/076698
- WO-A2-2010/038213
- WO-A2-2010/041179

## Description

La présente invention concerne une capsule pour l'extraction d'une boisson sous pression, selon le préambule de la revendication 1.

Une telle capsule possède un corps en forme de coupelle, sa paroi latérale sensiblement tronconique et son fond sont venus de matière. Elle est adaptée pour être disposée dans un logement d'un dispositif d'extraction de sorte qu'un liquide d'extraction sous pression pénètre dans la capsule par le fond et en sorte par la paroi de sortie.

La substance retenue dans la capsule étant sensible à l'air, la capsule est élaborée de manière à protéger de l'air ou de l'humidité la substance contenue dans la chambre de réception. La capsule est ouverte de manière automatique lors de sa mise en place dans un dispositif d'extraction.

Le document FR 2 373 999 décrit une telle capsule destinée à être disposée dans un logement d'un dispositif d'extraction de boissons, afin de produire une boisson telle que du café ou du thé.

Il existe un risque qu'une telle capsule s'affaisse lors de la fermeture du dispositif d'extraction de boissons et/ou de l'injection du liquide sous pression.

En outre, de telles capsules sont particulièrement chères à produire, en particulier quand elles sont produites en grandes séries.

On connaît également des capsules percées au niveau de la paroi formant le fond de la capsule. Toutefois, de telles capsules doivent également comporter un suremballage étanche afin de protéger la substance contenue dans la chambre de réception.

Il est également connu des capsules dont la paroi formant le fond de la capsule est destinée à être percée par une pointe du dispositif d'extraction. De telles capsules présentent l'inconvénient de n'être compatibles qu'avec un type de dispositif d'extraction donné. De plus, les capsules utilisées ne peuvent être qu'en aluminium, ces dernières ne pouvant être incinérer et n'étant pas biodégradables.

WO 2010/038 213 décrit une capsule dont le fond ou la paroi latérale comporte des zones aménagées qui se déchirent sous l'effet d'une pression externe.

Un but de l'invention est fournir une capsule dont l'ouverture soit facile.

De plus, la capsule selon l'invention peut être obtenue à coût réduit et est compatible avec de nombreux dispositifs d'extraction de boisson.

A cet effet, l'invention propose une capsule selon la revendication 1.

Selon d'autres modes de réalisation, la capsule comprend une ou plusieurs des caractéristiques suivantes, prise(s) isolément ou selon toutes les combinaisons techniquement possibles :
- la zone aménagée peut comporter une zone de moindre résistance apte à se déchirer sous l'effet d'une pression ;
- la zone de moindre résistance peut être une zone de moindre épaisseur pouvant comprendre des indentations ou un film mince possédant une épaisseur moindre que le reste de la paroi latérale ;
- la protubérance peut posséder dans un plan perpendiculaire à l'axe longitudinal sensiblement une forme en U ;
- la protubérance peut être reliée au reste de la paroi latérale, au voisinage du fond, par la zone de moindre résistance et, au voisinage de la paroi de sortie, par une bande de matière apte à fléchir et/ou à jouer le rôle de charnière suite à la déchirure de la zone de moindre résistance ;
- la paroi latérale et le fond peuvent être venus de matière ;
- la paroi latérale peut comporter des nervures de rigidification aménagées sur la face de la paroi faisant face à la chambre de réception.

L'invention concerne également un système comprenant une capsule selon l'invention et un dispositif d'extraction comportant un logement destiné à recevoir la capsule et un conduit d'amenée de liquide d'extraction sous pression dans le logement.

Selon un exemple particulier de réalisation, le logement du système est délimité par une première paroi fixe sur laquelle est destinée à venir en appui un rebord de la capsule, et une seconde paroi sensiblement en creux, mobile entre une position de repos permettant l'introduction de la capsule dans le dispositif d'extraction et une position active dans laquelle le dispositif d'extraction est apte à permettre l'extraction d'une boisson.

De préférence, la seconde paroi a une zone de forme complémentaire de celle de la paroi latérale.

L'invention concerne également un procédé d'extraction d'une boisson à l'aide d'un système selon l'invention comprenant une capsule selon certains modes de réalisation de l'invention, dans lequel lors du déplacement de la seconde paroi du logement de sa position de repos vers sa position d'extraction, la seconde paroi s'appuie sur la protubérance et provoque la rupture de la zone de moindre résistance.

L'invention sera mieux comprise à la lecture de la description qui va suivre, donnée uniquement à titre d'exemple et faite en se référant aux dessins annexés, sur lesquels :
- la Figure 1 est une vue en coupe longitudinale d'une capsule selon l'invention ;
- les Figures 2 et 3 sont des vues en coupe longitudinale montrant chacune un détail du corps de la capsule ;
- la Figure 4 est une vue en coupe selon la ligne IV-IV de la Figure 3 ;
- la Figure 5 représente une vue en coupe d'une capsule introduite dans le logement d'un dispositif d'extraction.

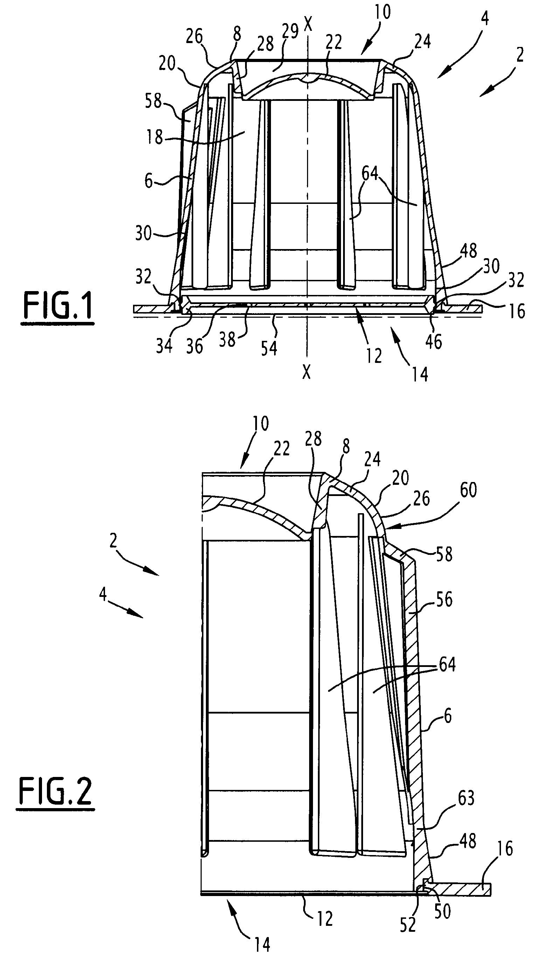

La capsule 2, représentée sur les Figures 1 à 4, comporte un corps creux 4 délimité par une paroi latérale 6 s'étendant suivant un axe longitudinal X-X, un fond 8 fermant une extrémité arrière 10 du corps 4, et une paroi de sortie 12 fermant une extrémité avant 14 du corps 4.

La capsule 2 comprend un rebord 16 annulaire entourant l'extrémité avant 14 du corps 4 et s'étendant radialement vers l'extérieur à partir de la paroi latérale 6.

La paroi latérale 6, le fond 8 et la paroi de sortie 12 délimitent ensemble une chambre 18 de réception d'une substance alimentaire pour l'extraction d'une boisson, par exemple du café. La substance présente dans la capsule 2 n'est pas représentée sur les dessins pour des raisons de clarté.

Comme cela sera décrit ultérieurement, la paroi latérale 6 est propre à permettre l'entrée d'un liquide d'extraction sous pression, de préférence de l'eau, et la paroi de sortie 12 est propre à permettre la sortie du liquide d'extraction après passage au travers de la substance contenue dans la capsule 2.

La paroi latérale 6 et le fond 8 sont venus de matière. En variante, le fond 8 n'est pas venu de matière avec la paroi latérale 6 et est rapporté sur celle-ci. Elles définissent un corps 20 réalisé d'un seul tenant en forme de coupelle. La paroi latérale 6 et le fond 8 sont réalisés en un premier matériau étanche à l'air et à l'eau, par exemple dans un matériau plastique ou dérivé du plastique, ou en métal, le matériau choisi étant inerte vis-à-vis de la substance contenue dans la capsule 2.

En variante, le fond 8 peut être constitué d'une pièce rapportée au niveau de l'extrémité arrière de la paroi latérale 6.

Le fond 8 comprend un dôme 22 central en forme de calotte sphérique. Le dôme 22 est à concavité orientée vers l'intérieur de la capsule 2. Le dôme 22 s'étend transversalement à l'axe X-X.

Le fond 8 comprend une région périphérique 24 annulaire entourant le dôme 22. Le dôme 22 est disposé en retrait vers l'intérieur de la capsule 2 par rapport à l'extrémité arrière 10 de la capsule 2. La région périphérique 24 comprend une portion périphérique 26 annulaire et une portion axiale 28. La portion périphérique 26 entoure la portion axiale 28. La portion axiale 28 est tubulaire et s'étend axialement suivant l'axe X-X en rentrant vers l'intérieur de la capsule 2 à partir d'un bord interne de la portion périphérique 26. La portion axiale 28 est tronconique convergeant vers l'intérieur de la capsule 2. Le dôme 22 est fixé à l'extrémité axiale de la portion axiale 28 située vers l'intérieur de la capsule 2, disposée en vis-à-vis de la paroi de sortie 12.

La portion tubulaire 28 rigidifie la région périphérique 24 du fond 8.

La portion périphérique 26 est arrondie. Elle s'étend radialement vers l'intérieur et axialement vers l'arrière à partir de la paroi latérale 6, et présente une concavité tournée vers l'intérieur du corps 4.

La portion axiale 28 et le dôme 22 délimitent dans le fond 8 un évidement 29 extérieur ouvert vers l'arrière et dont le fond est formé par le dôme 22 et la surface latérale par la portion axiale 28.

La paroi de sortie 12 est rapportée sur la paroi latérale 6. La paroi de sortie 12 et la surface interne 30 de la paroi latérale 6 comprennent des reliefs complémentaires d'encliquetage 32 permettant d'encliqueter la paroi de sortie 12 dans l'extrémité avant de la paroi latérale 6.

La paroi de sortie 12 est de forme discoïdale. La paroi de sortie 12 comprend un cadre 34 périphérique et un filtre 36 s'étendant en travers du cadre 34 et comprenant des orifices 38 pour le passage de l'eau.

Les reliefs d'encliquetage 32 comprennent une nervure de fixation 40 annulaire et une gorge de fixation 42 annulaire complémentaires, prévue l'une sur le cadre 34 et l'autre sur la paroi latérale 6. La nervure de fixation 40 est prévue pour s'encliqueter dans la gorge de fixation 42. La nervure de fixation 40 est ménagée sur la tranche 44 du cadre 34 et la gorge de fixation 42 est ménagée dans la surface interne 30 de la paroi latérale 6.

Le cadre 34 est autoportant de façon à conserver sa forme et assurer l'encliquetage de la paroi de sortie 12 dans la paroi latérale 6. Le cadre 34 fait saillie vers l'avant par rapport à l'extrémité avant 14 du corps 4 et notamment par rapport au rebord 16. Ainsi, le cadre 34 peut venir en appui contre un support d'un dispositif d'extraction.

Le cadre 34 est plus épais que le filtre 36. Le filtre 36 est ainsi disposé en retrait vers l'intérieur de la capsule 2 par rapport à la face externe 46 avant du cadre 34 tournée vers l'extérieur de la capsule 2. Ceci évite que le filtre 36 se déchire contre des reliefs du support du dispositif d'extraction propre à recevoir la capsule 2.

Les orifices 38 sont suffisamment petits pour retenir la substance, suffisamment nombreux pour laisser passer la boisson préparée, et de préférence répartis sur la surface du filtre 36 pour assurer une extraction correcte de la substance.

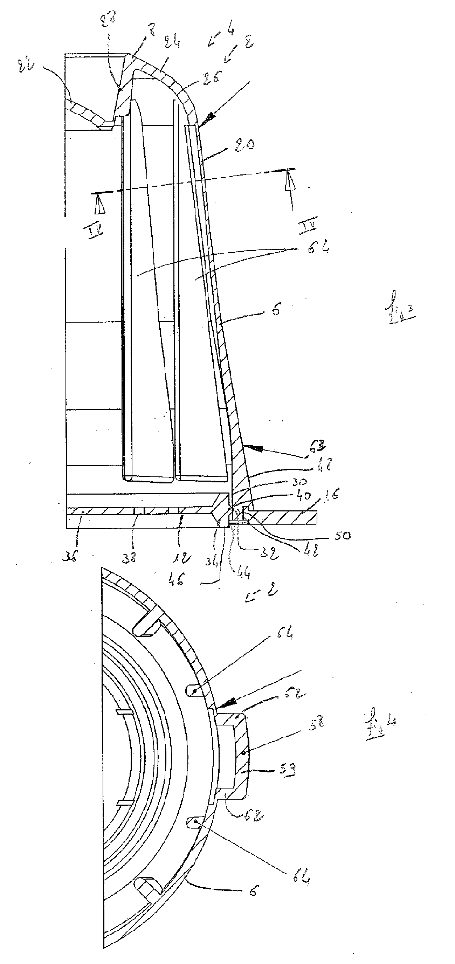

Comme représenté sur les Figures 1 et 3, le cadre 34 et le filtre 36 sont venus de matière. Ils sont par exemple réalisés en matière plastique moulée par injection.

Selon une variante non représentée, le cadre 34 peut être rapporté sur le filtre 36 et peut notamment être surmoulé sur le filtre.

Les orifices 38 de la paroi de sortie 12 sont calibrés afin de contrôler la pression de sortie de la boisson. La capsule 2 est fabriquée facilement en remplissant le corps 4 avec la substance puis en fixant la paroi de sortie 12 mécaniquement sur le corps 4 par simple clipsage de la paroi de sortie 12 dans la paroi latérale 6. Le clipsage permet de compacter la substance.

Le rebord 16 est rapporté sur la paroi latérale 6. Le rebord 16 entoure l'extrémité avant ouverte de la paroi latérale 6. Le rebord 16 s'étend radialement vers l'extérieur à partir de la surface externe 48 de la paroi latérale 6. Il ne supporte pas d'élément d'étanchéité rapporté ou de relief d'étanchéité déformable.

Comme visible sur les Figures 1 à 3, la surface externe 48 de la paroi latérale 6 définit, à proximité de l'extrémité avant, un dégagement annulaire 50 dans lequel la bordure interne 52 du rebord 16 est engagée. Le rebord 16 est fixé sur la paroi latérale 6 sans s'étendre dans la chambre 18 de réception et sans être en contact avec la substance contenue dans la capsule 2.

De préférence, le rebord 16 est surmoulé sur l'extrémité avant de la paroi latérale 6.

De préférence, le rebord 16 est constitué d'un deuxième matériau plastique, de préférence différent du premier matériau plastique constituant la paroi latérale 6 et le fond 8. Le deuxième matériau plastique est préférentiellement choisi pour être un matériau de faible coût. Le deuxième matériau plastique est par exemple un élastomère thermoplastique (TPE) ou du polyuréthane (PU) qui sont des matériaux peu couteux.

En outre, la capsule 2 comprend une membrane 54 d'étanchéité, visible à la figure 1, recouvrant la paroi de sortie 12 pour fermer de manière étanche la capsule 2 à l'extrémité avant de la paroi latérale 6. La membrane 54 est fixée sur le rebord 16 sans être fixée sur la paroi de sortie 12.

De préférence, la membrane 54 est pelable de façon à pouvoir être retirée avant usage par un utilisateur.

La paroi latérale 6 s'étend à partir du fond 8 suivant l'axe longitudinal X-X jusqu'à la paroi de sortie 12. La paroi latérale 6 est sensiblement tronconique de révolution autour de l'axe longitudinal X-X. La paroi latérale 6 s'évase de son extrémité arrière vers son extrémité avant. La paroi latérale 6 est rigide.

La paroi latérale 6 comporte au moins une zone aménagée 56, propre à permettre localement le déchirement de la paroi latérale 6 sous l'effet d'une pression exercée au niveau de ladite zone 56.

La zone aménagée 56 comporte au moins une protubérance 58, s'étendant radialement vers l'extérieur par rapport au reste la paroi latérale 6.

La ou chaque protubérance 58 est définie de manière à ne pas gêner l'introduction de la capsule 2 dans un logement du dispositif d'extraction.

Comme représenté à la Figure 4, la ou chaque protubérance 58 possède dans un plan perpendiculaire à l'axe longitudinal X-X sensiblement une forme en U et comprend une première paroi 59 formant le fond du U et deux parois latérales 62 reliant chacune une extrémité de la première paroi 59 à la paroi latérale 6.

La ou chaque protubérance 58 s'étend sensiblement sur toute la longueur de la paroi latérale 6 selon l'axe longitudinal X-X.

La ou chaque protubérance 58 est reliée dans sa partie arrière, au voisinage du fond 8, à la paroi latérale 6 par une zone de moindre résistance 60 pouvant, par exemple, être une zone de moindre épaisseur, définie par exemple par des indentations ou par un film mince possédant une épaisseur moindre que le reste de la paroi latérale 6. Cette zone de moindre résistance 60 est apte à se rompre sous l'effet d'une pression exercée au niveau de ladite zone 60.

La zone de moindre résistance 60 s'étend au moins partiellement au niveau de la liaison entre chaque paroi latérale 62 appartenant au U de la protubérance 58 et la paroi latérale 6 de la capsule 2. De préférence, la zone de moindre résistance 60 s'étend en partie arrière sur une distance comprise entre 1/10 et 1/3 de la longueur axiale de cette liaison.

La zone de moindre résistance 60 est toutefois suffisamment rigide de manière à ce que la capsule 2 conserve sa forme lors de sa manipulation par un utilisateur ou lors de sa manutention.

La zone de moindre résistance 60 est également conçue de manière à ce que la capsule 2 conserve son étanchéité à l'air et à l'eau et qu'ainsi la substance contenue à l'intérieur de la capsule 2 ne s'altère pas avant son introduction dans un dispositif d'extraction.

La ou chaque protubérance 58 est reliée dans sa partie avant, au voisinage de la paroi de sortie 12, à la paroi latérale 6 par une bande de matière épaisse 63 adaptée pour fléchir et/ou jouer le rôle de charnière suite à la déchirure de la zone de moindre résistance 60. Ainsi, cette bande de matière plus épaisse 63 empêche la ou chaque protubérance 58 de se séparer totalement de la capsule 2 de manière à éviter que la substance alimentaire retenue à l'intérieur de la capsule 2 ne se répande dans le logement du dispositif d'extraction destiné à recevoir la capsule.

De préférence, les protubérances 58 sont au nombre de trois. Un tel nombre de protubérance permet d'équilibrer les efforts subis par les zones de moindre résistance 60 lors de la déchirure de la paroi latérale. De plus, la présence de plusieurs protubérances 58 permet d'obtenir plusieurs entrées d'eau dans la capsule 2 et assure, lors des déchirures des zones de moindre résistance 60, une meilleure extraction des principes actifs contenus dans la substance alimentaire retenue par la capsule 2.

En outre, la paroi latérale 6 de la capsule 2 comprend sur sa face interne 30 orientée vers la chambre 18 de réception des nervures de rigidification 64 disposées de préférence de part et d'autre de chaque protubérance 58. Ainsi, ces nervures 64 empêchent, comme cela décrit ultérieurement, la déformation de la paroi latérale 6 lors de la rupture des zones de moindre résistance 60 suite à l'enfoncement des protubérances 58 vers l'intérieur de la chambre 18 de réception.

Bien évidement, tout autre élément de rigidification connu de l'homme du métier peut être envisagé.

De préférence, chaque nervure 64 s'étend sensiblement sur toute la longueur de la paroi latérale 6 selon l'axe longitudinal X-X.

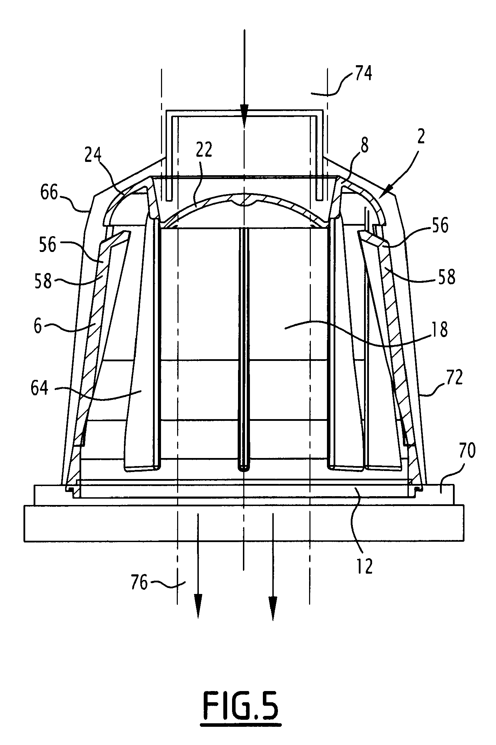

Lors de son utilisation, la capsule 2 est insérée dans un logement 66 de réception prévu à cet effet dans le dispositif d'extraction, comme représenté sur la Figure 5.

De façon connue, le logement 66 est délimité par une première paroi 70 fixe sensiblement plane formant support, sur laquelle est destinée à venir en appui le rebord 16 de la capsule 2, et une seconde paroi 72 sensiblement en forme de U. La seconde paroi 72 est mobile entre une position de repos permettant l'introduction de la capsule 2 dans le dispositif d'extraction de boisson et une position active dans laquelle le dispositif d'extraction est apte à permettre l'extraction d'une boisson, cette position d'extraction est représentée à la figure 5.

La seconde paroi 72 possède sensiblement une forme complémentaire à celle du corps 20 défini par la paroi latérale 6 et le fond 8 de la capsule 2. Dans sa position d'extraction, la seconde paroi 72 entoure sensiblement le corps 20 de la capsule 2.

Afin de permettre l'extraction de la boisson, le dispositif d'extraction comprend également un conduit d'amenée 74 d'eau sous pression débouchant à l'intérieur du logement 66 à proximité du fond 8 de la capsule. En outre, le support 70 comprend au moins un orifice d'évacuation 76 de la boisson.

Avant son introduction dans le dispositif d'extraction, la membrane 54 d'étanchéité est retirée.

Nous allons à partir de ce point décrire l'extraction d'une boisson suite à l'insertion de la capsule 2 selon l'invention dans le dispositif d'extraction.

Au cours d'une première étape, la capsule 2 est insérée au sein du dispositif d'extraction de manière à ce que son rebord 16 soit en appui contre le support 70 délimitant une partie du logement 66. Au cours de cette étape, la seconde paroi 72 délimitant le logement 66 se trouve à distance du corps 20 de la capsule 2.

Au cours d'une seconde étape, la seconde paroi 72 est déplacée vers sa position active, de manière à venir à proximité du corps 20 de la capsule. Au cours de cette étape, la seconde paroi 72 heurte la ou chaque protubérance 58 et provoque la rupture de la zone de moindre résistance 60 obligeant la ou chaque protubérance 58 à entrer dans le volume général défini par la paroi latérale 6. La ou chaque protubérance 58 se détache alors en partie arrière de la paroi latérale 6 et bascule en direction de l'intérieur de la chambre 18 de réception autour de la bande de matière épaisse 63 reliant la partie avant de la protubérance 58 à la paroi latérale 6. Cette rupture permet l'ouverture de la capsule 2 de manière à ce que la substance retenue soit librement accessible. De part sa conception et notamment grâce à la présence des nervures de rigidification 64, la paroi latérale 6 de la capsule 2 ne se déforme pas suite à la rupture de la ou des zone(s) de moindre résistance 60. Il est à noter que la forme en U de la ou chaque protubérance favorise également la rigidité de la capsule. L'ouverture créée au niveau de la paroi latérale est limitée de manière à éviter que la substance alimentaire retenue à l'intérieur de la capsule 2 ne se répande dans le logement du dispositif d'extraction destiné à recevoir la capsule.

Au cours d'une étape suivante, de l'eau est amenée sous pression par le conduit d'amenée 74 dans le logement 66. L'eau sous pression entre à l'intérieur de la capsule 2 au niveau de la ou des rupture(s) de la paroi latérale 6 résultant du détachement de la ou chaque protubérance 58. L'eau traverse la substance contenue dans la capsule, puis ressort par l'orifice d'évacuation 76 au travers du filtre 36.

L'invention s'applique aux capsules pour l'extraction de café sous pression et à des capsules pour l'extraction d'autres boissons sous pression, telle que le thé, le chocolat, etc.... Ainsi, l'invention concerne de manière générale une capsule pour l'extraction d'une boisson sous pression.

On notera que la description donnée ci-dessus n'est nullement restrictive, et les caractéristiques des différentes variantes et des différents modes de réalisation peuvent être combinées les unes avec les autres sans sortir du cadre de l'invention.

## Revendications

1. Capsule pour l'extraction d'une boisson sous pression, du type comportant un corps creux (4) délimité par une paroi latérale (6) s'étendant suivant un axe longitudinal (X-X), un fond (8) fermant une première extrémité (10) du corps (4) et une paroi de sortie (12) fermant une seconde extrémité (14) du corps (4), ledit corps (4) délimitant une chambre (18) de réception d'une substance pour la préparation d'une boisson, la paroi latérale comportant au moins une zone aménagée (56), propre à permettre localement le déchirement de la paroi latérale (6) sous l'effet d'une pression exercée au niveau de ladite zone (56), la zone aménagée (56) comportant une protubérance (58) s'étendant radialement vers l'extérieur par rapport au reste de la paroi latérale (6), ladite protubérance étant reliée au reste de la paroi latérale (6) au moins partiellement par la zone de moindre résistance (60), **caractérisée en ce que** la protubérance (58) s'étend sensiblement sur toute la longueur de la paroi latérale (6) selon l'axe longitudinal (X-X).

2. Capsule selon la revendication 1, **caractérisée en ce que** la zone aménagée (56) comporte une zone de moindre résistance (60) apte à se déchirer sous l'effet d'une pression.

3. Capsule selon la revendication 2, **caractérisée en ce que** la zone de moindre résistance (60) est une zone de moindre épaisseur pouvant comprendre des indentations ou un film mince possédant une épaisseur moindre que le reste de la paroi latérale (6).

4. Capsule selon l'une quelconque des revendications précédentes, **caractérisée en ce que** la protubérance (58) possède dans un plan perpendiculaire à l'axe longitudinal (X-X) sensiblement une forme en U.

5. Capsule selon l'une quelconque des revendication précédentes, **caractérisée en ce que** la protubérance (58) est reliée au reste de la paroi latérale (6), au voisinage du fond (8), par la zone de moindre résistance (60) et, au voisinage de la paroi de sortie (12), par une bande de matière (63) apte à fléchir et/ou à jouer le rôle de charnière suite à la déchirure de la zone de moindre résistance (60).

6. Capsule selon l'une quelconque des revendications précédentes, **caractérisée en ce que** la paroi latérale (6) et le fond (8) sont venus de matière.

7. Capsule selon l'une quelconque des revendications précédentes, **caractérisée en ce que** la paroi latérale (6) comporte des nervures de rigidification aménagées sur la face de la paroi faisant face à la chambre (18) de réception.

8. Système comprenant une capsule selon l'une quelconque des revendications précédentes et un dispositif d'extraction comportant un logement (66) destiné à recevoir la capsule (2) et un conduit d'amenée (74) de liquide d'extraction sous pression dans le logement.

9. Système selon la revendication 8, **caractérisé en ce que** le logement est délimité par une première paroi (70) fixe sur laquelle est destinée à venir en appui un rebord (16) de la capsule (2), et une seconde paroi (72) sensiblement en creux, mobile entre une position de repos permettant l'introduction de la capsule (2) dans le dispositif d'extraction et une position active dans laquelle le dispositif d'extraction est apte à permettre l'extraction d'une boisson.

10. Système selon la revendication 9, **caractérisé en ce que** la seconde paroi (72) a une zone de forme complémentaire de celle de la paroi latérale (6).

11. Procédé d'extraction d'une boisson à l'aide d'un système selon la revendication 9 ou 10 comprenant une capsule selon l'une quelconque des revendications précédentes, dans lequel lors du déplacement de la seconde paroi (72) du logement (66) de sa position de repos vers sa position d'extraction, la seconde paroi s'appuie sur la protubérance (58) et provoque la rupture de la zone de moindre résistance (60).

## Patentansprüche

1. Kapsel zur Extraktion eines Getränks unter Druck, von der Art umfassend einen Hohlkörper (4), der durch eine Seitenwand (6) begrenzt ist, die sich entlang einer Längsachse (X-X) erstreckt, einen Boden (8), der ein erstes Ende (10) des Körpers (4) abschließt, und eine Austrittswand (12), die ein zweites Ende (14) des Körpers (4) abschließt, wobei der Körper (4) eine Kammer (18) zur Aufnahme einer Substanz für die Zubereitung eines Getränks begrenzt, wobei die Seitenwand mindestens eine Spezialzone (56) umfasst, die dazu geeignet ist, stellenweise das Zerreißen der Seitenwand (6) unter der Einwirkung eines Drucks, der an dieser Zone (56) ausgeübt wird, zu erlauben, wobei die Spezialzone (56) eine Ausstülpung (58) umfasst, die sich im Verhältnis zum Rest der Seitenwand (6) radial nach außen erstreckt, wobei die Ausstülpung mit dem Rest der Seitenwand (6) mindestens teilweise durch die Zone des geringsten Widerstands (60) verbunden ist, **dadurch gekennzeichnet, dass** sich die Ausstülpung (58) im Wesentlichen über die gesamte Länge der Seitenwand (6) entlang der Längsachse (X-X) erstreckt.

2. Kapsel nach Anspruch 1, **dadurch gekennzeichnet, dass** die Spezialzone (56) eine Zone des geringsten Widerstands (60) umfasst, die geeignet ist, um unter der Einwirkung eines Drucks zu zerreißen.

3. Kapsel nach Anspruch 2, **dadurch gekennzeichnet, dass** die Zone des geringsten Widerstands (60) eine Zone der geringsten Dicke ist, die Auszahnung oder eine dünne Folie, die eine geringere Dicke als der Rest der Seitenwand (6) besitzt, umfassen kann.

4. Kapsel nach einem der vorhergehenden Ansprüche, **dadurch gekennzeichnet, dass** die Ausstülpung (58) eine im Wesentlichen U-förmige Ebene rechtwinklig zur Längsachse (X-X) besitzt.

5. Kapsel nach einem der vorhergehenden Ansprüche, **dadurch gekennzeichnet, dass** die Ausstülpung (58) mit dem Rest der Seitenwand (6) in der Nähe des Bodens (8) über die Zone des geringsten Widerstands (60) und in der Nähe der Austrittswand (12) durch einen Materialstreifen (63), der geeignet ist, um nach dem Einreißen der Zone des geringsten Widerstands (60) sich zu biegen und/oder die Rolle eines Scharniers zu übernehmen, verbunden ist.

6. Kapsel nach einem der vorhergehenden Ansprüche, **dadurch gekennzeichnet, dass** die Seitenwand (6) und der Boden (8) aus demselben Material einstückig geformt sind.

7. Kapsel nach einem der vorhergehenden Ansprüche, **dadurch gekennzeichnet, dass** die Seitenwand (6) Versteifungsrippen umfasst, die auf der Vorderseite der Wand gegenüber der Aufnahmekammer (18) eingerichtet sind.

8. System, umfassend eine Kapsel nach einem der vorhergehenden Ansprüche und eine Extraktionsvorrichtung, die eine Aufnahme (66), die dazu gedacht ist, für die Kapsel (2) aufzunehmen, und eine Leitung (74) zum Zuführen einer Extraktionsflüssigkeit unter Druck in die Aufnahme umfasst.

9. System nach Anspruch 8, **dadurch gekennzeichnet, dass** die Aufnahme durch eine erste feststehende Wand (70), die dazu gedacht ist, für sich an einem Rand (16) der Kapsel (2) abzustützen, und eine im Wesentlichen vertiefte zweite Wand (72), die zwischen einer Ruheposition, die das Einsetzen der Kapsel (2) in die Extraktionsvorrichtung erlaubt, und einer aktiven Position, in der die Extraktionsvorrichtung in der Lage ist, die Extraktion eines Getränks zu ermöglichen, beweglich ist, begrenzt ist.

10. System nach Anspruch 9, **dadurch gekennzeichnet, dass** die zweite Wand (72) eine Zone aufweist, deren Form die der Seitenwand (6) ergänzt.

11. Verfahren zur Extraktion eines Getränks anhand eines Systems nach Anspruch 9 oder 10, umfassend eine Kapsel nach einem der vorhergehenden Ansprüche, wobei bei der Verlagerung der zweiten Wand (72) der Aufnahme (66) von ihrer Ruheposition in ihre Extraktionsposition sich die zweite Wand an der Ausstülpung (58) abstützt und das Zerreißen der Zone des geringsten Widerstands (60) bewirkt.

## Claims

1. A capsule for extracting a pressurized drink, of the type including a hollow body (4) delimited by a side wall (6) extending along a longitudinal axis (X-X), a bottom (8) closing a first end (10) of the body (4) and an outlet wall (12) closing a second end (14) of the body (4), said body (4) delimiting a chamber (18) for receiving a substance for preparing a drink, the side wall including at least one prepared area (56), capable of locally allowing the tearing of the side wall (6) under the effect of a pressure exerted at said area (56), the prepared area (56) including a protrusion (58) radially extending out towards with respect to the remainder of the side wall (6), said protrusion being connected to the remainder of the side wall (6) at least partly through the lower strength area (60), **characterized in that** the protrusion (58) extends substantially over the whole length of the side wall (6) along the longitudinal axis (X-X).

2. The capsule according to claim 1, **characterized in that** the prepared area (56) includes a lower strength area (60) able to tear under the effect of pressure.

3. The capsule according to claim 2, **characterized in that** the lower strength area (60) is an area of less thickness which may comprise indentations or a thin film having a smaller thickness than the remainder of the side wall (6).

4. The capsule according to any of the preceding claims, **characterized in that** the protrusion (58) substantially has a U-shape in a plane perpendicular to the longitudinal axis (X-X).

5. The capsule according to any of the preceding claims, **characterized in that** the protrusion (58) is connected to the remainder of the side wall (6), next to the bottom (8), through the lower strength area (60), and, next to the outlet wall (12), through a material strip (63) capable of bending and/or playing the role of a hinge after the tearing of the lower strength area (60).

6. The capsule according to any of the preceding claims, **characterized in that** the side wall (6) and the bottom (8) are made in the same material.

7. The capsule according to any of the preceding claims, **characterized in that** the side wall (6) includes stiffening ribs laid out on the face of the wall facing the receiving chamber (18).

8. A system comprising a capsule according to any of the preceding claims and an extraction device including a housing (66) intended for receiving the capsule (2) and a conduit (74) for bringing the pressurized extraction liquid into the housing.

9. The system according to claim 8, **characterized in that** the housing is delimited by a first fixed wall (70) upon which an edge (16) of the capsule (2) is intended to bear, and a second substantially hollow wall (72), movable between a rest position allowing introduction of the capsule (2) into the extraction device and an active position in which the extraction device is able to allow the extraction of a drink.

10. The system according to claim 9, **characterized in that** the second wall (72) has an area with a shape mating that of the side wall (6).

11. A method for extracting a drink by means of the system according to claim 9 or 10, comprising a capsule according to any of the preceding claims, wherein, during the displacement of the second wall (72) of the housing (66) from its rest position to its extraction position, the second wall bears upon the protrusion (58) and causes breakage of the lower strength area (60).
